**Europäisches Patentamt**

**European Patent Office**

**Office européen des brevets**

(19)

(11) Veröffentlichungsnummer: **0 258 534**
**A1**

(12) # EUROPÄISCHE PATENTANMELDUNG

(21) Anmeldenummer: **87107121.3**

(22) Anmeldetag: **16.05.87**

(51) Int. Cl.³: **G 11 B 5/265**
**G 11 B 5/29**

(30) Priorität: **04.09.86 DE 3630100**

(43) Veröffentlichungstag der Anmeldung:
**09.03.88 Patentblatt 88/10**

(84) Benannte Vertragsstaaten:
**DE FR GB IT**

(71) Anmelder: **GRUNDIG E.M.V. Elektro-Mechanische Versuchsanstalt Max Grundig holländ. Stiftung & Co. KG.**
**Kurgartenstrasse 37**
**D-8510 Fürth(DE)**

(72) Erfinder: **Eichhorn, Dieter c/o GRUNDIG E.M.V. Max Grundig**
**Holländ. Stiftung & Co. KG Kurgartenstrasse 37**
**D-8510 Fürth/Bay(DE)**

(54) **Magnetkopf mit zugeordnetem Löschkopf.**

(57) Beschrieben ist ein Magnetkopf (1) mit zugeordnetem Löschkopf (2), wobei der Magnetkopf (1) und der Löschkopf (2) je einen getrennten Montageträger aufweisen, und der Löschkopf (2) in einen Schacht im Montageträger (3) des Magnetkopfes (1) derart eingesetzt ist, daß der Magnetkopf (1) mit dem Löschkopf (2) eine Einheit bildet.

Fig. 1

MAGNETKOPF MIT ZUGEORDNETEM LÖSCHKOPF

BESCHREIBUNG

Die Erfindung betrifft einen Magnetkopf mit zugeordnetem Löschkopf zum Aufzeichnen, Wiedergeben und Löschen von Audio-Signalen.

Es sind Kombinationen von einem Magnetkopf mit einem Löschkopf bekannt, bei denen die einzelnen kompletten Kopfsysteme zusammengefaßt auf einem gemeinsamen Träger montiert sind, oder die einzelnen Teile der Systeme in einem gemeinsamen Gehäuse montiert und anschließend zusammen geprüft sind.

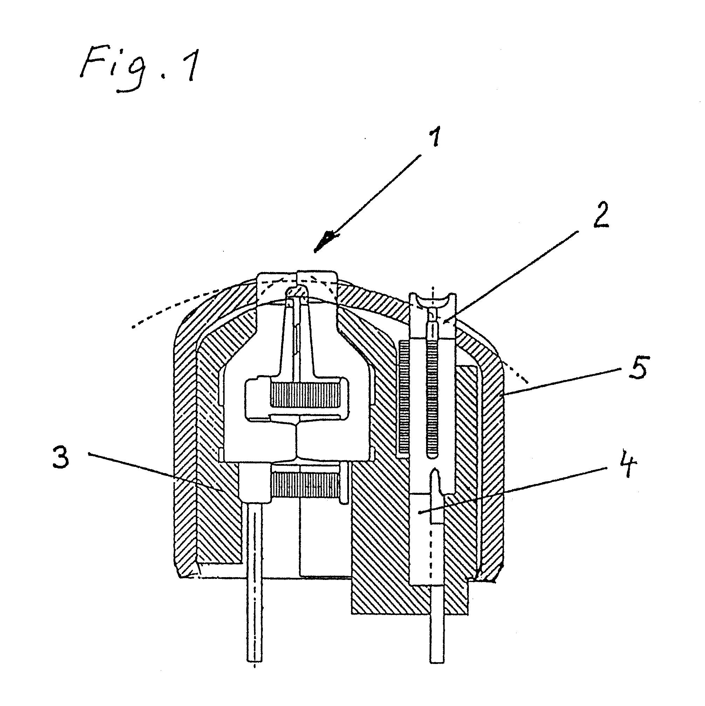

Nachteilig ist hierbei, daß einerseits der getrennte, komplette Aufbau mit zusammengefaßter Montage aufwendig

4

beide Systeme auf einem getrennten Montageträger 3 und 4 montiert sind. Erst die zusammengefaßten Systeme sind in einem gemeinsamen Abschirmbecher 5 eingeschoben. Die in den Montageträger 3 eingesetzten Systeme sind nach der Figur 1 vor dem Bearbeiten des Kopfspiegels (gestrichelte Linie) dargestellt.

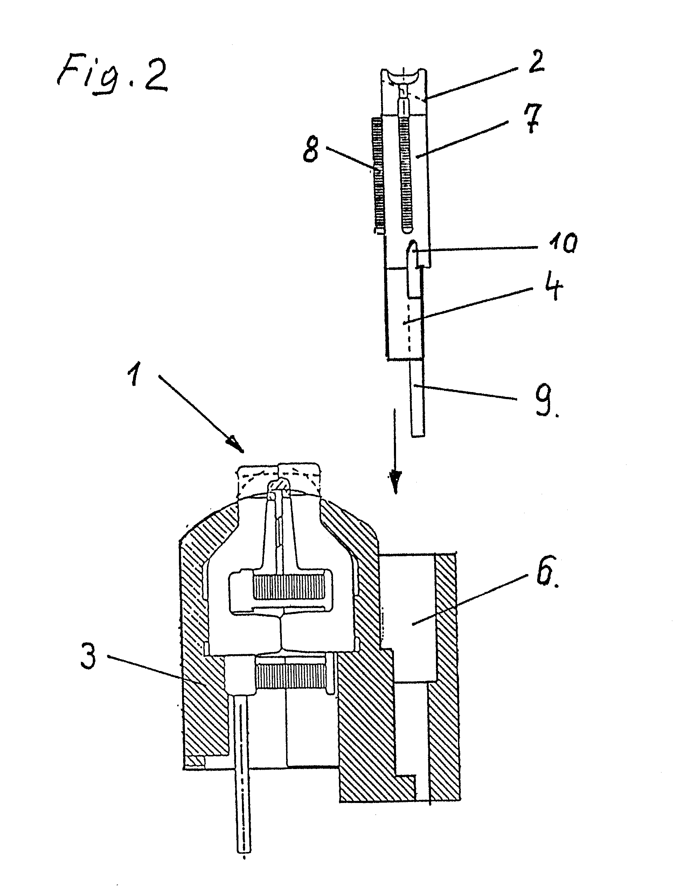

Wie die Figur 2 zeigt, weist der Montageträger 3 einen Schacht 6 auf, in den der vormontierte Löschkopf 2 klemmend eingeschoben wird. Der Löschkopf besteht aus dem Kern bzw. Kernteilen 7 und einer Wicklung 8, wobei die Kernteile vom Montageträger 4 zu einer Kopfeinheit zusammengehalten werden. In den Montageträger sind ferner zwei lötbare Anschlußstreifen 9 für die Wicklung 8 eingesteckt und verankert. Der Kern 7 bzw. die Kernteile werden durch am Montageträger einstückig angebrachte federnde Stecklaschen 10 gehalten. Der so vormontierte Löschkopf kann bereits ohne endgültig geschliffenen Kopfspiegel aufzuweisen, vorgeprüft werden. Der Magnetkopf ist vor dem Einstecken des Löschkopfes im Montageträger 3 montiert und besteht im wesentlichen aus geschichteten Kernblechen mit zugeordnetem Arbeitsspalt und aus einer Drahtwicklung mit entsprechenden Anschlußstreifen. Die Kernbleche sind klemmend im Montageträger 3 gehalten. Es ist möglich, daß bei gleichem Aufbau mehrere Magnetsysteme im Montageträger 3 in gleicher Weise eingesetzt sind.

# MAGNETKOPF MIT ZUGEORDNETEM LÖSCHKOPF

## PATENTANSPRÜCHE

1. Magnetkopf mit zugeordnetem Löschkopf zum Aufzeichnen, Wiedergeben und Löschen von Audio-Signalen,
d a d u r c h   g e k e n n z e i c h n e t ,   daß der Magnetkopf (1) und der Löschkopf (2) je einen aus Kunststoff gefertigten Montageträger (3 und 4) aufweisen und getrennt montiert sind, daß der Montageträger (3) des Magnetkopfes einen Schacht (6) zur Aufnahme des Löschkopfes aufweist, daß der Löschkopf (2) in den Schacht eingesetzt und lagefixiert ist, daß der Montageträger des Magnetkopfes mit Löschkopf in einen Abschirmbecher (5) derart klemmend eingeschoben ist, daß die Bandkontaktflächen beider Systeme (1, 2) gemeinsam zu bearbeiten sind.

2

2. Magnetkopf nach Anspruch 1, dadurch gekennzeichnet, daß der Montageträger (4) des Löschkopfs (2) federnde Stecklaschen (10) zur Halterung der Kernteile (7) aufweist.

3. Magnetkopf nach den Ansprüchen 1 und 2, dadurch gekennzeichnet, daß in den Montageträger (4) des Löschkopfes lötbare Anschlußstreifen (9) klemmend eingesteckt sind.

4. Magnetkopf nach einem der bisherigen Ansprüche, dadurch gekennzeichnet, daß in den Montageträger (3) des Magnetkopfes mehrere, vorzugsweise zwei Magnetkopfsysteme eingesetzt sind.

Fig. 1

Fig.2